# EUROPEAN PATENT APPLICATION

(11) **EP 4 234 285 A1**
(43) Date of publication of application: **30.08.2023**
(21) Application number: 23020036.2
(22) Date of filing: 20.01.2023
(51) Int. Cl.: B60H 1/00, B60H 1/16

(54) **AUXILIARY ENGINE ELECTRIC CAR HEATING SYSTEM**

(30) Priority: 03.02.2022 US 202217591624
(71) Applicant: PODHOLA, Kamil, 46311 Liberec 30 (CZ)
(72) Inventor: PODHOLA, Kamil, 46311 Liberec 30 (CZ)

(57) **Abstract**

The application relates to an auxiliary engine system (AES) for heating an electric car comprising a heating system (402) and a rechargeable power source (403) powering an electric motor (404). The AES comprises an internal combustion engine (ICE 405) producing heat to heat the electric car. The AES can heat people transported in the electric car and/or the rechargeable power source. The ICE can be coupled with an electric energy generator (406). The ICE can be air and/or liquid cooled which systems can heat the electric car. The ICE can be fuelled by defined types of fuel stored in a fuel tank (407). The ICE can be a two-stroke engine, a four-stroke engine, a turbine. The rechargeable power source can be coupled with a defined electro component. The AES can be provided in a modular system. A heating method for an electric car is proposed.

## Description

### Technical Field

The invention relates to heating electric cars.

### Background Art

There is a wide range of electric cars and hybrid cars. Hybrid cars can have an electric motor and an internal combustion engine (ICE) to drive the vehicle. Such joint propulsion systems can increase weight of the electric car. There is a wide range of heating systems for electric cars (mainly heating pumps).

### Disclosure of Invention

There is a need for an effective, simple, cheap and lightweight heating system for electric cars based on an economical small lightweight ICE.

It is an object of the present invention to provide an auxiliary engine system (AES) for heating an electric car with a heating system and a rechargeable power source powering an electric motor, the AES comprising an internal combustion engine to produce heat to heat said electric car. The produced heat can heat people and/or the rechargeable power source in the electric car.

It is another object to provide the AES with the ICE coupled with an electric energy generator.

It is another object to provide the ICE air and/or liquid cooled which systems can heat the electric car.

It is another object to provide the ICE fuelled by defined types of fuel.

It is another object to provide the ICE as a two-stroke engine, a four-stroke engine, a turbine.

It is another object to provide the AES with the rechargeable power source coupled with a defined electrocomponent.

It is another object to provide the AES be provided in a modular system.

It is yet another object to provide a heating method for an electric car.

In a first aspect, the invention discloses the auxiliary engine system.

In a second aspect, the invention discloses the heating method for an electic car.

### Brief Description of Drawings

The invention will now be described by way of example. Only essential elements of the invention are schematically shown and not to scale to facilitate immediate understanding, emphasis being placed upon illustrating the principles of the invention.

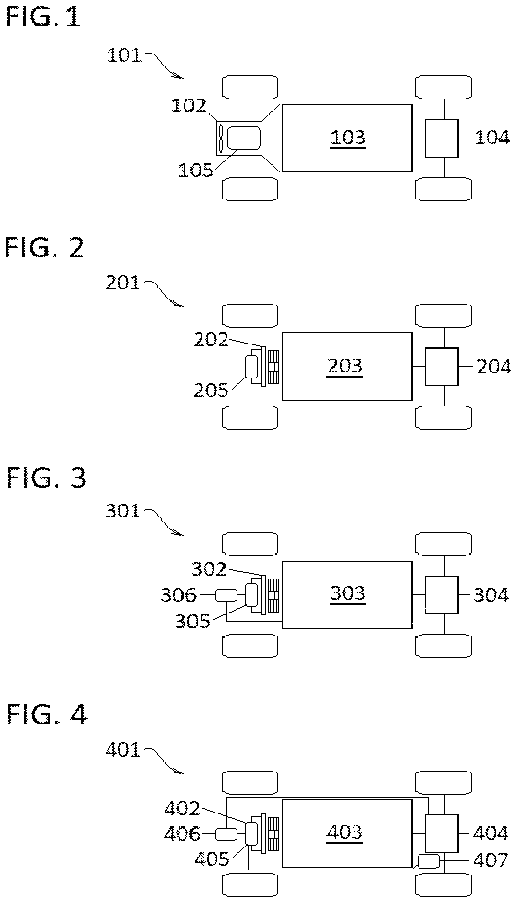

FIG. 1 is a schematic plan view of an embodiment of an air cooled auxiliary engine system for heating an electric car.

FIG. 1 is a schematic plan view of an embodiment of an air cooled auxiliary engine system for heating an electric car (101) comprising a heating system (102) [which can include a fan, various processing units including a central processing unit, sensors and actuators, conduits and hoses, etc., as known in the art], and a rechargeable power source (103) [which can be a battery pack, a battery capacitor hybrid pack, etc. and which can include thermal management system, source management system, etc., as known in the art] powering an electric motor (104) [which can be any type of an electric motor configured to propel the wheels, and which can be an in-wheel motor, can be alternatively situated in front of the car, in the middle, as known in the art]. The electric car (101) comprises an internal combustion engine (105) [which can be a two-stroke, a four-stroke, a rotary, a continuous cobustion engine, etc., and which can be coupled with an air intake system /which can include filters, carburetors, injection systems, high pressure systems, etc./, an exhaust system /which can include pipes, mufflers, catalytic convertors, sensors, etc./, as known in the art; the ICE system can be quite simple with a limited number of components, e.g. as used on mopeds, chainsaws, or even much smaller] producing heat to heat the electric car (101) [which can be a highway passenger car, a bus, a truck, a three wheeler, etc.].

FIG. 2 is a schematic plan view of an embodiment of a liquid cooled auxiliary engine system for heating an electric car.

FIG. 2 is a schematic plan view of an embodiment of a liquid cooled auxiliary engine system for heating an electric car (201) comprising a heating system (202) [which can include a heat exchanger, a pump, a thermostat, a fan with a fan motor and a resistor, a switch, a fusebox, a heating system of conduits, a ventilation system, a climatisation system, etc., as known in the art] and a rechargeable power source (203) powering an electric motor (204). The electric car (201) comprises an internal combustion engine (205) producing heat to heat the electric car (201).

FIG. 3 is a schematic plan view of an embodiment of an auxiliary engine system for heating an electric car, the engine being coupled with an electric energy generator producing electric energy to charge a rechargeable power source.

FIG. 3 is a schematic plan view of an embodiment of an auxiliary engine system for heating an electric car (301) comprising a heating system (302) and a rechargeable power source (303) powering an electric motor (304). The electric car (301) comprises an internal combustion engine (305) producing heat to heat the electric car (301). The engine (305) can be coupled with an electric energy generator (306) [which can be an alternator, a dynamo, etc. and which can be coupled with a cut-out, a relay, an electronic regulator, a processing unit, a source management system, etc., as known in the art] producing electric energy to charge the rechargeable power source (303) [e.g. via a source management system including converters, inverters and other electrocomponents, as known in the art].

FIG. 4 is a schematic plan view of an embodiment of an auxiliary engine system for heating an electric car, the engine being coupled with an electric energy generator producing electric energy to drive the electric car.

FIG. 4 is a schematic plan view of an embodiment of an auxiliary engine system for heating an electric car (401) comprising a heating system (402) and a rechargeable power source (403) powering an electric motor (404). The electric car (401) comprises an internal combustion engine (405) producing heat to heat the electric car (401). The engine (405) can be coupled with an electric energy generator (406) producing electric energy to drive the electric motor (404) [e.g. via a converter, via a source management unit, via the rechargeable power source (403), etc., as known in the art]. The engine (405) can be coupled with a fuel tank (407) containing fuel [e.g. a hydrocarbon fuel, a biofuel, etc., the size of the fuel tank can be relatively small, e.g. 0,26 gal, etc.].

### Best Mode for Carrying Out the Invention

The following detailed description shows the best contemplated modes of exemplary embodiments. The description is made for the purpose of illustrating the general principles of the invention, and in such a detail that a skilled person in the art can recognise the advantages of the invention, and can be able to make and use the invention. However, it will be apparent to one of ordinary skill in the art that these specific details need not be used to practice the present invention. Well-known structures, materials, circuits, processes have not been shown or described in detail in order not tο unnecessarily obscure the present invention. The objects and advantages of this invention may be realized and obtained as pointed out in the appended claims. Advantageous embodiments are the subject of the description, the figures and the dependent claims. Additional advantages may be learned by practice of the invention. The detailed description is not intended to limit the principle of the presented invention, but only to show the possibilities of it. The description and the detailed description are exemplary and explanatory only.

The terms used in the claims and the specification shall refer to their synonyms as well.

The terms in the description put into parentheses show another variant, aspect, possibility, etc., of an element, feature, component, etc., of the invention.

As used in the claims and the specification, the term "electric car" shall preferably refer to a highway car, passenger car, bus, truck, and the like.

As used in the claims and the specification, the term "electric motor" shall refer to any constructional type inclusive of AC, DC motors, other motors /e.g. stepper motors, brushless motors, hysteresis motors, reluctance motors, universal motors, linear motors, etc./, jet engines, turbines, etc.

As used in the claims and the specification, the term "internal combustion engine" shall refer to any constructional type inclusive of hydrogen fuelled engines, hydrocarbon fuels fuelled engines, etc., and shall refer to reciprocating, rotary, continuous combustion engines as well.

As used in the claims and the specification, the term "electric energy generator" shall also refer to electric devices providing a function of an electric motor and of an electricity generator, and shall also refer to electric devices providing regenerative braking, and shall also refer to electric devices coupled with (output, input) shafts, gears, transmissions, clutches, driven wheels, etc., and shall refer to alternators, alternator rectifiers, dynamos, etc.

As used in the claims and the specification, the term "rechargeable power source" shall preferably not exclusively refer to power sources including rechargeable batteries [e.g. strings, packs, modules, cells], capacitors [e.g. strings, packs, modules, cells], hybrid sources, energy storage elements [e.g. mechanical (e.g. compressed air, compressed gas, flywheel, etc.), electromagnetical (e.g. using superconductors, etc.), electrochemical (e.g. flow battery, ultrabattery, etc.), thermal (e.g. phase change material, cryogenic energy storage, liquid nitrogen engine, etc.), chemical (e.g. biofuel storage, power to gas storage, power to liquid, hydrogen storage /e.g. condensed polycyclic hydrocarbons, metal hydrides, etc./, hydrogen peroxide, etc.); a number of hydrogen storage methods can be used: adsorptive, absorptive, as liquid /e.g. at very low temperatures and under high pressure/, as highly compressed gas.]. Rechargeable power sources can provide peak shaving, e.g. for optimum ICE fuel consumption.

The term shall refer to a swappable rechargeable power source as well.

As used in the specification, the term "rechargeable battery" shall preferably not exclusively refer to lithium-ion, lithium-ion polymer, lithium-air, lithium-sulphur, lithium-metal, lithium iron phosphate, nickel-metal hydride, nickel-iron, nickel-cadmium, lead-acid, valve regulated lead-acid, absorbed glass mat, gel [e.g. for high pressure, high temperature implementations], solid state, organic radical batteries. Rechargeable batteries may include fuel cells, piezoelectric elements, springs. A variety of arrangements of multiple rechargeable batteries may be used. Rechargeable batteries may be trickle, float charged, charged at fast, slow rates, etc.

As used in the specification, the term "capacitor" shall preferably not exclusively refer to supercapacitors, ultracapacitors, double-layer capacitors (e.g. with activated carbons, carbon aerogels, carbon nanotubes, nanoporous carbon, graphene, carbid-derived carbon), pseudocapacitors (e.g. with polymers, metall oxides), hybrid capacitors (e.g. with asymmetric electrodes, lithium-ion capacitors, with composite electrodes), electrolytic capacitors (e.g. aluminium electrolytic capacitors), ceramic capacitors, mica capacitors, film capacitors, chip shape, lead shape capacitors, multilevel circuit board processed capacitors, etc.

As used in the claims and the specification, the term "phase change materials" shall refer to systems using a pure phase change material (PCM) substance and to systems using methods for increasing the thermal conductivity (e.g. inserted fins, heat pipes; added fillers, foams, particles, nanostructures; metal/semimetal/nonmetal materials; carbon, graphite, graphene, composites), and to systems using dispersed/decentralised/microcapsule packaging.

As used in the claims and the specification, "A/B" shall refer to A and/or B.

As used in the claims and the specification, the singular forms are intended to include the plural forms as well.

The term "to couple" and derivatives shall refer to a direct or indirect connection via another device and/or connection, such a connection can be mechanical, hydraulical, electrical, electronical, electromagnetical, pneumatical, communication, functional, etc., the term shall also refer to attach, detach, detachably attach, mount, connect, fix, join, support, link, bear, fasten, secure, tie, tether, chain, screw, weld, bond, solder, etc. Similarly as far as the term "coupling" concerned.

The terms "to comprise", "to include", "to contain", "to provide" and derivatives specify the presence of an element, but do not preclude the presence or addition of one or more other elements or groups and combinations thereof.

The term "consisting of" characterises a Markush group which is by nature closed. Single members of the group are alternatively useable for the purpose of the invention. Therefore, a singular if used in the Markush group would indicate only one member of the group to be used. For that reason are the countable members listed in the plural. That means together with qualifying language after the group "or combinations thereof" that only one member of the Markush group can be chosen or any combination of the listed members in any numbers. In other words, although elements in the Markush groups may be described in the plural, the singular is contemplated as well. Furthermore, the phrase "at least one" preceding the Markush groups is to be interpreted that the group does not exclude one or more additional elements preceded by the phrase.

The invention will be described in reference to the accompanying drawings.

### FIG. 1 is a schematic perspective illustration of an embodiment of a ....DETAILED DESCRIPTION TO FOLLOW.

### Common features of drawings.

The components as shown in FIGs. 1 to 4 can have different layouts [e.g. a position of an internal combustion engine, a rechargeable power source, an electric energy generator, an electric motor, etc.].

The (swappable) rechargeable power sources can be used for other than propelling purposes [e.g. regenerative braking, auxiliary systems, heating, ventilation and air conditioning (HVAC) systems, etc.], can be used for purposes of (hybrid) electric cars transported by the electric car and charged during transport.

The (swappable) rechargeable power sources can include a package [e.g. a container, a climatised container, a waterproof, watertight, pressurised package, etc.], include and/or be coupled with a source management system which can include power electronics, communication interfaces, various circuit topologies including electrocomponents such as converters, inverters, voltage regulators, power factor corrections, rectifiers, filters, controllers, processors, etc. The source management systems can provide monitoring [e.g. State of Charge (SoC), etc.], calculating, reporting, cell balancing, controlling, etc., functions with regard to the energy management. The source management system can include energy management processors, databases, position identification system [e.g. global positioning satellite (GPS) system receivers] and provide intelligent source management using anticipated track profile and conditions, charging opportunities, past operating experience, etc.

The (swappable) rechargeable power sources can include an energy storage element including a complex technology [e.g. including energy storage, energy transfer, energy harvesting, energy generating, etc.] which can include power electronics, communication interfaces, various circuit topologies, etc. They can be mobile units, compact units, enclosed units, portable units, skid mounted units, and the like.

The auxiliary engine systems can comprise a functional, communication, shape compatibility [e.g. can comprise compatible power transfer interfaces, compatible communication interfaces, compatible rechargeable power sources, compatible source management systems, thermal management systems, etc.].

The AES can provide thermal management systems which can be included by the electric car to thermally manage charging and/or discharging the (swappable) rechargeable power sources. The systems can thermally manage the electric energy generators, chargers of charging stations, charging cables, charging interfaces, rechargeable batteries and/or capacitors and/or energy storage elements of the power sources, etc. The thermal management systems of energy storage elements can include complex technologies. The systems can include ventilators, thermal exchangers, compressors, chillers, condensers, heaters, sensors, pumps, programmable controllers, thermal medium conducts, valves, heat pipes, vapor chambers, heat sinks, fillers, etc. The systems can use thermal exchange with (offshore) water, air, ground, etc.

### Common requirements on the AES in cold areas

The AeS can be provided in the Arctic, the Antarctic, subpolar, cold areas. In that case, system elements components can be designed to be conform with cold, extremely cold, temporarily cold conditions. The (swappable) rechargeable power sources and other components of the system can be thermally insulated. The ICA can use antifreeze in liquid cooling systems of the electric cars. Thermal management systems provided to manage charging and/or discharging can include heating systems. The elements can be preferably designed to cope with icing, etc.

No limitations are intended others than as described in the claims. The present invention is not limited to the described exemplary embodiments. It should be noted that various modifications and combinations of the elements of the AES can be made without departing from the scope of the invention as defined by the claims.

The elements, components, integers, features, standards desribed in this specification and the used terminology reflect the state of knowledge at the time of the filling of this application and may be developed in the future [e.g. charging standards, charging interfaces, chargers, rechargeable power sources, energy storage elements, communication techniques, fuels, hydrogen production and hydrogen storage techniques, fuel cell technologies, etc.].

### Industrial Applicability

The present invention may provide effective, cheap and lightweight heating system for electric car especially in cold areas and/or periods thus saving energy in (swappable) rechargeable power source for driving purposes and thus increasing electric cars' autonomy.

## Claims

1. An auxiliary engine system for heating an electric car comprising a heating system and a rechargeable power source powering an electric motor, **characterised in that** it comprises an internal combustion engine to produce heat to heat said electric car.

2. The auxiliary engine system according to claim 1, wherein said heat heats people in said electric car.

3. The auxiliary engine system according to claim 1, wherein said heat heats said rechargeable power source.

4. The auxiliary engine system according to claim 1, wherein said internal combustion engine is coupled with an electric energy generator to produce electric energy to charge said rechargeable power source.

5. The auxiliary engine system according to claim 1, wherein said internal combustion engine is coupled with an electric energy generator to produce electric energy to drive said electric car.

6. The auxiliary engine system according to claim 1, wherein said internal combustion engine is air cooled, wherein said aircooling heats said electric car.

7. The auxiliary engine system according to claim 1, wherein said internal combustion engine is liquid cooled, wherein said liquidcooling heats said electric car.

8. The auxiliary engine system according to claim 1, wherein said internal combustion engine is phase change materials cooled, wherein said phase change material cooling heats said electric car.

9. The auxiliary engine system according to claim 1, wherein said internal combustion engine is fuelled by fuel, wherein at least one said fuel is selected from gazoline, diesel, biodiesel, ethanol, methanol, natural gas, propane, butane, hydrogen, or combinations thereof.

10. The auxiliary engine system according to claim 1, wherein said internal combustion engine is a two-stroke engine.

11. The auxiliary engine system according to claim 1, wherein said internal combustion engine is a four-stroke engine.

12. The auxiliary engine system according to claim 1, wherein said internal combustion engine is a turbine.

13. The auxiliary engine system according to claim 1, wherein said rechargeable power source is coupled with an electrocomponent, wherein at least one said electrocomponent is selected from the group consisting of electronic devices, power devices, sensors, targets, actuators, amplifiers, resonators, rectifiers, filters, inverters, converters, transformers, voltage regulators, power factor corrections, compensations, power electronics, controllers, processors, inductors, capacitors, resistors, diodes, varactors, switches, conductors, rechargeable power sources, source management systems, electric motors, driving units, distributed electrocomponents, electrocomponents arrays, switchable electrocomponents, controllable electrocomponents, or combinations thereof.

14. The auxiliary engine system according to claim 1 provided as part of a modular system comprising: a module, wherein at least one said module is selected from the group consisting of said heating systems, said rechargeable power sources, said electric motors, said internal combustion angines, electric energy generators, electrocomponents coupled with said rechargeable power sources, or combinations thereof.

15. A heating method for an electric car comprising a heating system and a rechargeable power source powering an electric motor, **characterised in that** it comprises:
the step of powering said electric car with said electric motor;
the step of heating said electric car with an internal combustion engine,
wherein the steps can be interchanged and/or repeated.
